# EUROPEAN PATENT SPECIFICATION

(11) **EP 1 569 987 B1**
(45) Date of publication and mention of the grant of the patent: **18.12.2013**
(21) Application number: 03769666.3
(22) Date of filing: 28.10.2003
(51) Int. Cl.: C08J 7/04, B01D 69/12, B01J 20/32, B01J 20/30, C08J 9/24

(54) **PROCESS**
VERFAHREN
PROCEDE

(30) Priority: 29.10.2002 GB 0225133; 07.07.2003 GB 0315858
(43) Date of publication of application: 07.09.2005
(73) Proprietor: Porvair Filtration Group Limited, Hampshire PO15 5RT (GB)
(72) Inventor: COWIESON, David Richard, Wrexham LL12 0TX (GB); PILETSKY, Sergiy, A., Cranfield MK43 0EE (GB)
(74) Representative: Alcock, David
(86) International application number: PCT/GB2003/004641
(87) International publication number: WO 2004/039874

(56) References cited:
- WO-A-00/07702
- WO-A-01/31339
- WO-A-01/39881
- WO-A-96/36877
- US-A- 5 369 012
- US-A- 5 798 261
- PILETSKY S A ET AL: "SURFACE FUNCTIONALIZATION OF POROUS POLYPROPYLENE MEMBRANES WITH MOLECULARLY IMPRINTED POLYMERS BY PHOTOGRAFT COPOLYMERIZATION IN WATER" MACROMOLECULES, AMERICAN CHEMICAL SOCIETY. EASTON, US, vol. 33, no. 8, 18 April 2000 (2000-04-18), pages 3092-3098, XP001015564 ISSN: 0024-9297
- ULBRICHT M ET AL: "Novel molecularly imprinted polymer (MIP) composite membranes via controlled surface and pore functionalizations" DESALINATION, ELSEVIER SCIENTIFIC PUBLISHING CO, AMSTERDAM, NL, vol. 149, no. 1-3, 10 September 2002 (2002-09-10), pages 293-295, XP004386524 ISSN: 0011-9164
- SCHWEITZ L ET AL: "Alternative methods providing enhanced sensitivity and selectivity in capillary electroseparation experiments" JOURNAL OF CHROMATOGRAPHY, ELSEVIER SCIENCE PUBLISHERS B.V. AMSTERDAM, NL, vol. 892, no. 1-2, 15 September 2000 (2000-09-15), pages 203-217, XP004212065 ISSN: 0021-9673

## Description

### BACKGROUND ART

The separation techniques of solid phase extraction and chromatography have utilised the materials silica and polystyrene in specially prepared powder forms as adsorbent media. In more recent years, drug discovery programmes have required rapid synthesis of biologically active organic molecules using similar powders. Combinatorial chemistry is one approach for producing libraries of such molecules and solid phase synthesis is one of the preferred techniques used. In all of these applications the loose powder used can create handling problems with device assembly, performance and ease of use.

The solid phase extraction (SPE) applications utilise cartridges and well plates with the loose powder contained with them between two porous frits. An exact dose of the powder must be contained between the porous frits and device assembly in these applications can be problematic. The assembly process requires the insertion of a porous frit into the bottom of the micro-titre plate followed by the introduction of the sorbent powder, usually in the form of a slurry, and then the insertion of a second porous frit on top of the powder. The assembled micro-titre plate must then be dried out before it can be packaged ready for use. There may be additional drawbacks to applications that utilise loose powder. For example, the powder may be driven into the porous frit by liquids, thus blocking the cartridge. Poor performance may also result from flow channels being developed through the powder by the liquids (channelling).

Companies such as 3M and Merck have developed methods of immobilising the powder on inert substrates to alleviate this problem. For example, US 6,475,340 discloses a solid phase extraction sheet material that includes a porous matrix with an active particulate entrapped therein. The active particulate exhibits reactive and/or sorptive properties towards the chemical species to be removed. The sheet material may be used in a cartridge device. US 6,492,183 discloses multi-layer extraction articles having two porous support layers with a solid phase extraction (SPE) medium comprising a fluoropolymer between them. The fluoropolymer SPE medium may be in a variety of forms including a membrane that includes a fibril matrix and sorptive particles enmeshed therein.

More recently molecularly imprinted polymers (MIPs) have been produced for binding specific molecules in SPE. The MIP is typically milled to a fine powder and then the template molecule should ideally be thoroughly washed out. It is difficult to wash out all of the template and this can then interfere with the SPE application.

The problems faced in solid phase synthesis (SPS) differ from those of solid phase extraction. Chemists need to make large numbers of different molecules for drug screening programmes. Weighing out adsorbent powders and then filtering them from the reactants or solvents can be time consuming, especially when large numbers of separate reactions are being carried out. Companies such as Irori and Millennium Pharmaceuticals have addressed this problem by containing the powders in specialised packages. However, these packages are reported to have their own limitations in terms of difficulty of manufacture, poor reproducibility or low chemical activity.

WO/0021658 discloses a porous device for use in a method of synthesis comprising a body having an internal region which is porous wherein an active material, for example a solid support resin, is entrapped within the internal region. A typical example of this device is a functionalised resin encapsulated within a porous polyethylene plug.

The present invention alleviates the problems of the prior art.

In one aspect the present invention provides a process for the preparation of a functionalised porous material comprising the steps of (i) sintering polymer components to provide a porous substrate; the porous substrate comprising a body having an external surface and pores extending from the external surface into the body, wherein the pores define an internal surface; and (ii) grafting, using solvent-less plasma polymerisation, a molecularly imprinted polymer synthesised *in situ* using plasma polymerisation onto the porous substrate to provide the functionalised porous material; wherein the molecularly imprinted polymer is grafted onto the external surface and onto the internal surface of the porous substrate.

The functionalised porous material described herein may advantageously be utilised in solid phase extraction applications. Use as described herein typically eliminates many of the problematic manufacturing steps required in the prior art to provide cartridges and well plates for SPE. The functionalised porous material is further advantageous because it does not suffer from the prior art problems associated with use of loose powder such as blocking of the porous frits and channelling. Furthermore use of the present invention reduces the hold up volume of the device.

When the porous substrate has been grafted with an MIP and is used as a sorbent frit as a replacement for sorbent powder in an SPE application, the template used to imprint the MIP can be completely removed from it because it forms a relatively thin coating on the porous plastic structure. This improves the selectivity/activity of the MIP and prevents contamination or false results caused by any leaching of the original template material.

The functionalised porous material described herein may also be utilised in solid phase synthesis. Unlike the prior art, the present invention does not require that a functionalised resin be encapsulated within a porous device. Thus the need for encapsulation steps during manufacture are removed. The functionalised porous material typically has a functionalised external and/or internal surface and is thus a highly convenient material typically having a specific chemical activity. The functionalised porous material may, for example, be used as a scavenger. In this application it may be added to a reaction vessel and then removed following clean up advantageously allowing the reaction to be taken to the next stage. In another embodiment, the functionalised porous material may be used in synthesis. It may advantageously be transferred from one reaction to the next without the need for a filtration step.

The shape, pore structure and type and degree of functionalisation of the functionalised porous material may all be selected such that the functionalised porous material is suitable for any one of a wide range of applications. The functionalised porous material is typically highly suitable for use in high throughput applications involving a high degree of automated handling. The functionalised porous material of the present invention may advantageously be utilised in numerous applications including SPE, SPS, catalysis, sensors, assays and drug delivery.

For ease of reference, these and further aspects of the present invention are now discussed under appropriate section headings. However, the teachings under each section are not necessarily limited to each particular section.

### PREFERRED EMBODIMENTS

### PROCESS

As previously mentioned, the present invention provides a process for the preparation of a functionalised porous material comprising the steps of (i) sintering polymer components to provide a porous substrate; the porous substrate comprising a body having an external surface and pores extending from the external surface into the body, wherein the pores define an internal surface; and (ii) grafting using solvent-less plasma polymerisation, a molecularly imprinted polymer synthesised *in situ* using plasma polymerisation onto the porous substrate to provide the functionalised porous material; wherein the molecularly imprinted polymer is grafted onto the external surface and onto the internal surface of the porous substrate.

The term "sintering" as used herein means heating to a temperature below the melting point of the polymer components, optionally under pressure, such that the polymer components form a single coherent body.

The term "polymer components" as used herein means compounds obtainable by polymerisation of monomer units. The polymer components of the present invention may be in any suitable form including powder, pellet, or fibre.

The term "porous substrate" as used herein means a body having an external surface and pores extending from the external surface into the body, wherein the pores define an internal surface.

The term "molecularly imprinted polymer" is well understood in the art. It is understood to mean a material comprising imprint sites obtainable by polymerisation of monomer units, wherein the imprint sites are regions of the 3-dimensional structure of the material which are complementary to a specific template molecule.

The term "functionalised moiety" as used herein means a chemical species other than a molecularly imprinted polymer, comprising at least one functional group.

The term "pulsed plasma polymerisation" as used herein means exposing a substrate to a pulsed plasma field through which vaporised monomers pass, such that the vaporised monomers bond to the substrate to form a polymer chain.

### Polymer components

In one aspect, the polymer components are polyolefin components.

Examples of suitable polyolefins include ethylene vinyl acetate, ethylene methyl acrylate, polyethylenes, polypropylenes, ethylene-propylene rubbers, ethylene-propylene-diene rubbers, poly(1-butene), polystyrene, poly(2-butene), poly(1-pentene), poly(2-pentene), poly(3-methyl-1-pentene), poly(4-methyl-1-pentene), 1,2-poly-1,3-butadiene, 1,4-poly-1,3-butadiene, polyisoprene, polychloroprene, poly(vinyl acetate), poly(vinylidene chloride), poly(tetrafluoroethylene), poly(vinylidene fluoride) and acrylonitrile-butadiene-styrene.

In a preferred aspect, the polymer components are polyethylene components or polypropylene components, preferably polyethylene components.

Polyethylene is typically characterised by its density and low density polyethylene (LDPE), high density polyethylene (HDPE) and ultra high molecular weight polyethylene (UHMWPE) may all be used in the present invention. Preferably the polyethylene components are HDPE components.

In one aspect the polymer components are a polymer powder. In a preferred aspect, the polymer components are a polyethylene powder. In a highly preferred aspect, the polymer components are an HDPE powder.

In a preferred embodiment the polymer components are sintered in a mould. In this embodiment, preferably the resultant porous substrate has a three-dimensional shape such as a cube, a sphere, a cylinder or a rod.

In another preferred embodiment the polymer components are sintered on a belt, preferably in a continuous oven. In this embodiment, preferably the resultant porous substrate is a sheet.

In one preferred embodiment, the polymer components are sintered in a compression mould. In this embodiment, the mould is charged with the polymer components, heated to the sintering temperature of the polymer components, allowed to equilibrate and then subjected to pressure. The amount of pressure and the nature in which the pressure is applied may be used to control the properties of the porous substrate, such as the void volume and the pore size. The pressure typically ranges from about 6.89 kPa (1 psi) to about 68.9 kPa (10 psi), depending on the nature of the polymer components and the desired porosity of the porous substrate. In general, the greater the pressure applied to the mould, the smaller the average pore size and the greater the mechanical strength of the final product. The duration of time during which the pressure is applied also varies depending on the desired porosity of the porous substrate and is typically from about two to about ten minutes, preferably from about four to about six minutes.

Once the porous substrate has been formed, the mould is allowed to cool. The cooling may take place while the pressure is being applied or once the pressure has been removed. The porous substrate is then removed from the mould.

The mould may be any suitable shape. In a preferred aspect the mould is cylindrical or rectangular prismatic. More preferably the mould is cylindrical.

In another preferred aspect, the polymer components are polymer fibres. Preferably in this aspect the polymer fibres are sintered to provide a matrix.

### Porous Substrate

The porous substrate may be any suitable shape, such as a cube, sphere, cylinder, rod, sheet, disc, membrane or film. In one preferred aspect the porous substrate is cylindrical or rectangular prismatic, i.e. plug-shaped or tablet-shaped. The shape of the porous substrate may be determined by a number of factors. For example, the shape may be determined by the shape of mould used in the sintering process or by use of a belt in a continuous oven. The porous substrate may be moulded directly or may be cut or stamped from, for example, a sheet. In particular, where the preferred shape is a disc or other essentially two dimensional shape, it could be cut from a flat sintered porous sheet or moulded in an appropriately shaped mould.

The shape of the porous substrate may be selected according to the desired application of the functionalised porous material. For example, the porous substrate may have a shape suitable for use in a conventional micro-titre plate, SPE cartridge or other such device.

As previously mentioned, the porous substrate is a body having an external surface and pores extending from the external surface into the body, wherein the pores define an internal surface.

The presence of the pore structure within the porous substrate is highly advantageous because of the increased surface area.

The choice of polymer components typically influences the nature of the porosity of the porous substrate, such as the pore structure and pore size and its internal surface area. In particular, the size and shape of the chosen polymer components are important. The physical characteristics of the porous substrate can therefore be controlled and modified according to the desired final use of the functionalised porous material. This ability to tailor the pore structure can minimise hold up volume for SPE and SPS applications or provide the optimum flow path for a sensor or bio-reactor.

Preferably the porous substrate comprises a plurality of interconnected pores on a larger-than-molecular scale. Preferably the porous substrate is permeable, in that the pores are interconnected to allow fluid flow from the external surface into an adjacent region in the body, and from one adjacent region to another. Preferably, the pores are interconnected so that fluids may flow throughout the porous substrate.

The pores may be isotropic or anisotropic, and may be non-directional or unidirectional. The pores may be connected by a so-called tortuous path, which essentially means that the pore channels are randomly directed through the article in a non-directional manner.

However, the pores need not be interconnected but instead may be separate from one another. For example, the pores may be separate from one another but extend completely through the porous substrate, or the pores may terminate within the porous substrate ("non-through" pores). However, the pores should be accessible to fluids that contact the external surface of the porous substrate, i.e., the porous substrate should not comprise only pores that are isolated from the external surface.

The porosity of the porous substrate may be characterised in terms of pore diameter and void volume.

The pores typically have effective diameters larger than about 0.01 microns (1 angstrom), preferably at least about 1 micron up to about 2000 microns, and more preferably from about 10 to about 1000 microns. The porous substrate may be microporous, in which case the pores have a pore size in the range between about 0.05 and about 20 microns. The porous substrate may be macro-porous, in which case the pores have a pore size of about 20 microns to about 2000 microns, preferably about 20 to 500 microns. A preferred porous substrate has a nominal pore size of about 1 to about 50 microns. Porosity may be determined according to ASTM D276-72, and pore size distribution may be determined according to ASTM F316-70.

The porosity of the porous substrate can also be characterised in terms of void volume. The void volume is defined as the volume within the porous substrate that would be accessible to a fluid that entered the porous substrate. Thus, the porosity may be defined as the void volume divided by the total volume of the porous substrate. Porous substrates of any void volume from 1% to 90% may be used in the present invention. Preferred porous substrates have a void volume of about 10% to about 90%, more preferably about 20% to about 80%, more preferably about 30% to about 70%, and still more preferably about 35% to about 60%.

### Molecularly Imprinted Polymer

As previously mentioned, the process of the present invention comprises the step of grafting using solvent-less plasma polymerisation a molecularly imprinted polymer synthesised *in situ* using plasma polymerisation onto the porous substrate.

Preferably the molecularly imprinted polymer is capable of interacting with a species selected from the group consisting of a metal ion, a toxin, a pharmaceutical compound and a microbial organism.

In a preferred aspect, the molecularly imprinted polymer is capable of immobilising a species selected from the group consisting of a metal ion, a toxin, a pharmaceutical compound and a microbial organism.

A molecularly imprinted polymer of the present invention may be used to trap and immobilise chemical species or biological organisms either for detection or to render them inoperative thereby acting as a protection device.

Molecularly imprinted polymers of the present invention are produced *in situ* using plasma polymerisation. A preferred method is described below.

As previously mentioned, the term "molecularly imprinted polymer" as used herein means a material comprising imprint sites obtainable by polymerisation of monomer units, wherein the imprint sites are regions of the 3-dimensional structure of the material which are complementary to a specific template molecule.

The first step in the production of a molecularly imprinted polymer typically involves the provision of a reaction mixture comprising monomer units and a template molecule. This reaction mixture may optionally comprise other agents such as a polymerisation initiator, and a homogenisation agent. The homogenisation agent aids the even dispersion of the template molecule throughout the reaction mixture.

It will be appreciated by those skilled in the art that the term "template molecule" is not limiting and may include, for example, low molecular weight molecules, high molecular weight molecules such as polymers, synthetic and naturally-occurring molecules, metal ions and even microbial organisms.

The next step is the polymerisation of the reaction mixture. This is carried out *in situ* using plasma-less polymerisation. During polymerisation the liquid reaction mixture is converted into a polymer mass containing the template molecules dispersed throughout. Following initiation the monomers link together to form a solid. The monomers seek the tightest configuration possible as they solidify around the template molecules. As a result, the polymer mass contains a large number of the template molecules that are each tightly surrounded by the polymer mass.

The template molecules have a unique 3-dimensional shape, and so they form cavities or pockets throughout the polymer mass that surrounds and contains them. As such, the polymer mass is a formation of a molecularly imprinted polymer (MIP), that is imprinted to the template molecules that it contains. Typically a very large number of the template molecules are contained in the polymer mass.

The next step typically involves grinding, pulverising, or fracturing the polymer mass into a plurality of polymer fragments each of which typically contains many template molecules. Many of the template molecules are at the surface of the polymer fragments but some are surrounded by and therefore contained within the fragments. The template molecules at the surface of the polymer fragments should ideally be removed to expose the imprint sites. Ideally all the template molecules should be removed from the MIP fragments to improve retention during their use and to prevent leaching.

Depending upon the desired final application, the polymer fragments may have any desired range of sizes (diameters). The finer the polymer fragments are, the greater will be the resultant surface area. A greater surface area is usually desirable because more imprint sites are exposed. Therefore, a smaller (finer) granulation of the polymer fragments will, generally, improve the efficiency of the final application. However, there are situations where a larger diameter or coarser size for the polymer fragments is desirable. The polymer fragments preferably have a diameter of 0.1µm to 200µm, preferably 1µm to 200µm, more preferably 10µm to 200µm, such as 10µm to 100µm, such as 10µm to 50µm, such as 20µm to 30µm.

In the next step the polymer fragments are washed to remove the template molecules. This may be achieved by contacting the polymer fragments with a cleaning solution and stirring and agitating the solution. The cleaning solution is selected according to the particular template molecule. The template molecule should typically have good solubility in the cleaning solution. The cleaning solution may be water or may be an organic solvent. The washing step may be repeated until substantially all the template molecules on the surface of the polymer fragments have been removed. A number of different cleaning solutions may be used during the washing step. The washed polymer fragments may be dried, if desired, in any suitable manner.

### Grafting

Prior to grafting, the external surface and/or internal surface of the porous substrate is typically activated. Activation methods include plasma treatment, corona discharge, oxidising chemicals, ultra-violet irradiation and other forms of radiation treatment. Activation may increase the surface concentration of the chemical species that are grafted.

The molecularly imprinted polymer of the present invention is grafted onto the porous substrate using solvent-less plasma polymerisation technique.

In one aspect, preferably the polymer components are a polymer powder and the chemical species is grafted using pulsed plasma polymerisation.

In another aspect the molecularly imprinted polymer is grafted using pulsed plasma polymerisation.

Plasma polymerisation is typically carried out in a reactor, such as in an inductively coupled cylindrical glow discharge reactor. The porous substrate is placed in the reactor and is contacted with reactive gas-phase radicals. The radicals typically form covalent bonds with the porous substrate and are thus grafted to the substrate. The radicals are typically generated from a source gas, in a non-equilibrium, low pressure environment, and delivered to the porous substrate by at least one of convective and diffusional transport. The radicals are generated from the source gas by exposing the source gas to radical forming conditions as created by, for example, a radiofrequency (RF), microwave or direct current discharge (any of which will create a gas plasma discharge), laser sustained discharges, Ultra-Violet (UV) laser photolysis, high-powered UVNUV lamp driven photolysis, high energy electron beams, and other high-intensity ionising or radical forming radiation sources. While any of these radical forming conditions may be used to generate the reactive radicals, gas plasma discharge is a preferred technique. Generation of the gas plasma discharge by a pulsed radiofrequency is particularly preferred.

A plasma polymerisation process is environmentally advantageous because it uses minimal amounts of energy and raw materials to effect the grafting and the functionalisation is typically substantially uniform throughout the porous substrate. A plasma polymerisation process is particularly advantageous if the molecularly imprinted polymer to be grafted is in short supply, for example due to cost factors or difficulty of synthesis, since there is minimal wastage of the chemical species using this technique.

Pulsed plasma polymerisation provides further advantages over plasma polymerisation. The use of pulsed plasma polymerisation typically reduces the fragmentation and structural rearrangement of the molecularly imprinted polymer during grafting, resulting in greater structure retention. Pulsing the plasma provides a less energetic deposition process, which allows the polymerisation to occur with much less degradation than when using continuous plasma. The use of a signal generator to trigger pulses in the radio frequency discharge is the preferred method of achieving this.

Without wishing to be bound by theory, it is believed that pulsing the electrical discharge on the microsecond-millisecond time scale enables conventional polymerisation reaction pathways to proceed during the duty cycle off-period. This leads to a reduction in the structural rearrangement and minimises damage to the molecularly imprinted polymer yet to be grafted and those already grafted onto the porous substrate. It also minimises the damage to the porous substrate itself.

As previously mentioned, the porous substrate comprises a body having an external surface and pores extending from the external surface into the body, wherein the pores define an internal surface.

The molecularly imprinted polymer is grafted onto the external surface and onto the internal surface of the porous substrate.

More preferably the molecularly imprinted polymer is grafted substantially uniformly throughout the porous substrate.

For many applications, the functionalised porous material is useful because the initially produced functionality (e.g. amino or hydroxyl groups) provides chemical handles which may be elaborated into bio-molecules and other application-specific chemical groups.

A functionalised porous material obtained or obtainable by the process of the invention is described herein.

### Molecularly Imprinted Polymer

Preferably the molecularly imprinted polymer is as described herein.

The molecularly imprinted polymer is attached to the external surface and the internal surface of the porous substrate.

The molecularly imprinted polymer is synthesised *in situ* using plasma polymerisation.

As previously mentioned, the first step in the production of a molecularly imprinted polymer typically involves the provision of a reaction mixture comprising monomer units and a template molecule. The molecularly imprinted polymer is synthesised *in situ* by plasma polymerisation.

The molecularly imprinted polymer is synthesised *in situ* by attaching one or more of the monomer units to the porous substrate by plasma polymerisation (deposition). The template may then adhere (bind) to the attached monomer unit(s) and the remaining monomer units could then be introduced. Polymerisation of the monomer units could then be effected and the template could then be removed, for example by washing, leaving the molecularly imprinted polymer attached to the porous substrate.

The molecularly imprinted polymer is synthesised *in situ* using plasma polymerisation. More preferably, the molecularly imprinted polymer is synthesised *in situ* using pulsed plasma polymerisation.

Thus, the present invention provides a process for the preparation of a functionalised porous material comprising the steps of: (i) sintering polymer components to provide a porous substrate; the porous substrate comprising a body having an external surface and pores extending from the external surface into the body, wherein the pores define an internal surface; and (ii) grafting, using solvent-less plasma polymerisation, a molecularly imprinted polymer onto the porous substrate to provide the functionalised porous material, wherein the molecularly imprinted polymer is grafted onto the external surface and onto the internal surface of the porous substrate. The molecularly imprinted polymer is synthesised *in situ,* by plasma polymerisation of monomer units. In this aspect preferably a template molecule is bound to the porous substrate prior to plasma deposition of monomer units. Preferably the template molecule is bound to the porous substrate using solution phase techniques. Preferably the template molecule is a protein molecule.

The molecularly imprinted polymer is grafted onto the porous substrate using solvent-less plasma polymerisation. More preferably, the molecularly imprinted polymer is grafted using pulsed plasma polymerisation.

In a preferred aspect, the molecularly imprinted polymer is capable of interacting with a species selected from the group consisting of a metal ion, a toxin, a pharmaceutical compound, or a microbial organism. Preferably the molecularly imprinted polymer is capable of interacting with a microbial organism.

Preferably the molecularly imprinted polymer is capable of immobilising a species selected from the group consisting of a metal ion, a toxin, a pharmaceutical compound, or a microbial organism. Preferably the molecularly imprinted polymer is capable of immobilising a microbial organism.

### RF Tag

In one preferred aspect, the functionalised porous material described herein comprises an RF tag.

A radiofrequency tag (RF tag) is a glass encased microchip that can be read by a reader. Other readable devices may also be used in the present invention as alternatives to RF tags. Suitable readable devices may be obtained from Innovision Research & Technology, Ash Court, 23 Rose St., Wokingham, Berkshire, RG40 1XS, UK.

Incorporation of an RF tag in the functionalised porous material described herein may enable the tracking of specific complex reaction pathways amongst a number of such reactions occurring in parallel.

For example a functionalised porous material (FPM) comprising an RF tag could be used in the synthesis of a combinatorial library. Each unique FPM can be tagged with an RF tag having a unique identifier code. A divide, track and apportion procedure may be utilised in this synthetic strategy. Initially, a large quantity of RF tagged FPMs suitable for solid phase synthesis are prepared. The FPMs are then divided evenly into the number of reaction vessels required to couple each monomer in the library repertoire. The reaction vessel location of each FPM is recorded via scanning of its RF transponder code. Redistribution of the FPMs is then guided by a computer database whereby the past and future reaction vessel locations of each FPM is recorded and determined, via scanning of the FPM's RF transponder code. By repeating this procedure throughout each step of the library synthesis, a histogram of the synthesis may be developed in a database.

The inert nature of the RF tag, a glass encased microchip, avoids the problematic side-reactions which are associated with the use of chemical tags. Furthermore, the transmission or retrieval of information from any functionalised porous material is instantaneous, avoiding the added reaction times associated with synthesising chemical tags.

Preferably the RF tag is incorporated in the functionalised porous material in a manner that enables the RF tag to be removed and reused. It is advantageous for the RF tags to be reusable because they are expensive. The RF tag may be incorporated during any of the process steps for the preparation of the functionalised porous material.

In a preferred aspect, the RF tag is incorporated after the sintering step (i). Preferably, the RF tag is incorporated in the porous substrate. In this aspect, the porous substrate may be formed or adapted to comprise a cavity into which the RF tag may be inserted. When the porous substrate is produced by sintering polymer components in a mould, the mould may be configured such that the porous substrate is formed comprising a cavity of suitable dimensions for an RF tag to be inserted in it.

In another preferred embodiment, the RF tag is incorporated in the functionalised porous material. In this aspect, the functionalised porous material may be formed from a porous substrate that had been formed or adapted to comprise a cavity into which the RF tag could be inserted. Alternatively, the functionalised porous material itself may have been adapted to comprise a cavity into which the RF tag could be inserted. The porous substrate or functionalised porous material may be adapted to comprise a cavity by any suitable means such as by mechanical means. The cavity could be created by cutting out part of the porous substrate or functionalised porous material.

### Void Volume and Internal Surface Area

The void volume is defined as the volume within the porous substrate that would be accessible to a fluid that entered the porous substrate. Thus, the porosity may be defined as the void volume divided by the total volume of the porous substrate.

The internal surface area may be measured by mercury intrusion porosimetry or gas adsorption such as BET (Brunauer, Emmett and Teller).

Preferably the functionalised porous material described herein has a low void volume.

Preferably the functionalised porous material described herein has a high void volume.

Preferably the functionalised porous material described herein has a low internal surface area.

Preferably the functionalised porous material described herein has a high internal surface area.

Described herein is a functionalised porous material wherein the void volume is low and the internal surface area is high.

The low hold up volume, high level of activity and high degree of specificity afforded by this embodiment make it particularly suitable for sample preparation involving small quantities of analyte.

Described herein is a functionalised porous material wherein the void volume is high and the internal surface area is high.

The open structure of this material makes it suitable for applications where high liquid flow or diffusion rates are important such as sensors, bio-reactors, filters or catalysis applications. A functionalised porous material of this type could advantageously be incorporated in a filtration device such that during its duty as a filter it also removes specific target species such as antigens. This is normally only possible using a much finer filter media with all the consequent process restrictions such as higher operating pressures.

Described herein is a functionalised porous material wherein the void volume is high and the internal surface area is low.

The open structure of this material together with its lower density of available sites make it particularly suitable for synthesis reactions where steric effects might be a problem.

In a preferred aspect the functionalised porous material described herein is in the shape of a cylinder or a rectangular prism. Preferably in this aspect the porous substrate is in the shape of a cylinder or a rectangular prism. Preferably in this aspect, the polymer components are sintered in a mould, wherein the mould is in the shape of a cylinder or a rectangular prism.

### Device

The functionalised porous material described herein may be advantageously incorporated in a device, such as a filtration device.

Thus, in one aspect, described herein is a device comprising a functionalised porous material as herein defined. Preferably the device is a filtration device. More preferably the device is a filtration device capable of filtering a target species such as an antigen.

Aspects of the invention are defined in the appended claims.

### BRIEF DESCRIPTION OF THE FIGURES

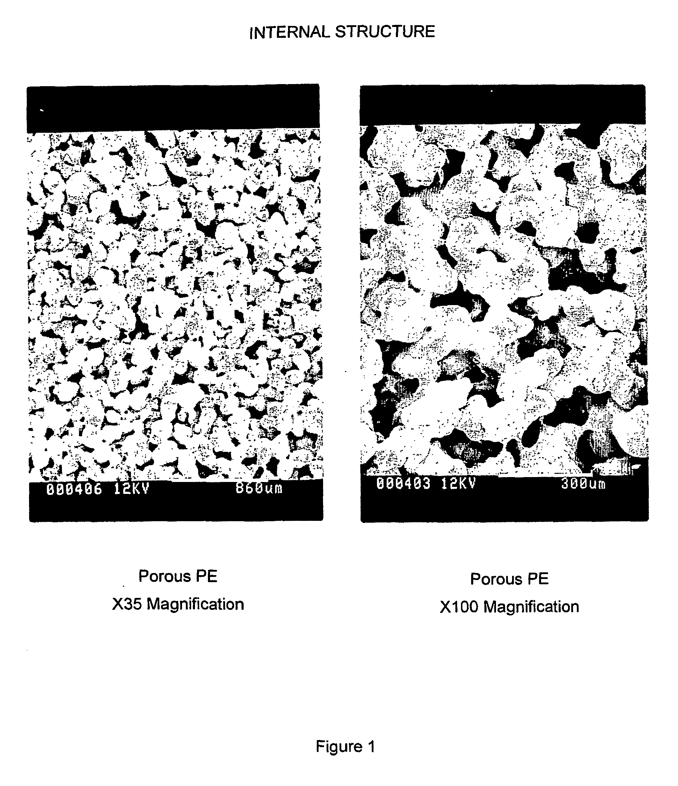

The present invention will now be described in further detail by way of example only with reference to the accompanying figures in which:-
Figure 1 is a scanning electron micrograph (SEM) showing the internal structure of a porous substrate.
Figure 2 (not according to the invention) is a Fourier Transform Infra-Red (FTIR) spectrum of a UV grafted polymer on porous polyethylene and non-modified porous polyethylene.
Figure 3 is an FTIR spectrum of continuous plasma grafted and non-modified porous polyethylene.
Figure 4 is an FTIR spectrum of pulse plasma grafted and non-modified porous polyethylene.
Figure 5 is a comparison of HorseRadish Peroxidase (HRP) retention for imprinted (MIP) and blank polymers, plasma grafted onto porous polyethylene based on methacrylic acid as the functional monomer.
Figure 6 shows HRP retention on a plasma grafted imprinted polymer based on vinyl pyridine as the functional monomer.

The present invention will now be described in further detail in the following examples.

### EXAMPLES

Experimental evidence of different methods of MIP deposition on porous polymers.

### Example 1 - A comparison of UV and plasma grafting to the surfaces of porous polyethylene

The experimentation in this example is designed to show that a molecularly imprinted polymer can be grafted to a porous polyethylene (PE) structure using an aqueous photochemical system and a gas phase plasma system.

### Part A (Preparation)

### UV Grafting (not according to the invention)

A molecularly imprinted polymer (MIP) porous polyethylene structure (Vyon^{®} T) was produced using a benzophenone (BP) coating as a photo-initiator on the internal surfaces of a porous polyethylene, UV radiation was used as the energy source. A similar process has been described previously in Ref. 1. The porous polyethylene was a Vyon^{®} T disc 47mm in diameter, 2mm thick with a nominal pore size of 10 µm, which is a proprietary product, manufactured by Porvair Technology. The MIP system was an aqueous solution based on atrazine (ATR) as the template molecule, methacrylic acid (MA) as the functional monomer and N,N-methylenebisacrylamide (MBA) as the cross-linker. Their concentrations were 0.5mM, 50mM and 100mM respectively. The grafting was carried out by exposing the disc in this solution to UV radiation with an energy density of 163mW/cm² for 18 minutes.

### Continuous Plasma Grafting

Similar porous polyethylene Vyon® T discs were grafted using a plasma polymerisation technique and a template, monomer, cross-linker system similar to the one described above where the template was atrazine the functional monomer was methacrylic acid and the cross-linker was ethylene glycol dimethacrylate (EGDA). These were used in the ratio's 0.3mM, 3mM and 30mM respectively and in the absence of water. EGDA was substituted for MBA because it is more volatile. The solid ATR dissolved completely in the MA/EGDA liquid to form the sample mixture. This was then subjected to a freeze thaw cycle to remove any water vapour, the discs were placed into the reaction vessel which was pumped down to base pressure and held for one hour to remove any moisture from the porous discs. The plasma deposition system was purpose built and consisted of a 3I cylindrical reaction vessel with two external conductively coupled contacts separated by a 10cm gap. The vessel was connected to a thermocouple pressure gauge and an inlet port. It had a base pressure of 1 x 10⁻² mbar which was achieved using a two stage Edwards rotary pump through a liquid nitrogen cold trap. A matching L-C circuit was used to minimise the standing wave ratio between a 13.56 MHz rf power supply and the electrical discharge. A similar system is described in Ref. 2. The sample mixture was introduced into the reaction vessel as a vapour by diffusion through the inlet port, the vapour pressure was held at 0.1 mTorr throughout the polymerisation/deposition process. The mixture sample was allowed to purge through the reaction vessel and permeate into the porous polyethylene discs for 5 minutes prior to igniting the plasma. A 2 Watt continuous wave plasma was then ignited to carry out the polymerisation/deposition, which was continued for 10 minutes. Upon termination of the plasma discharge the gas mixture was allowed to continue passing through the reaction vessel for a further 2 minutes.

### Pulsed Plasma Grafting

In a separate set of experiments a pulsed plasma was used to carry out the polymerisation/deposition. The substrate material and sample mixture was identical to that described above and the same reaction vessel was used but the rf power supply was triggered using a signal generator to create on/off pulses. In each of these experiments the sample mixture was introduced in the manner described above 5 minutes prior to the plasma treatment. A pulsed plasma was then ignited to carry out the polymerisation/deposition, the peak power during the pulse-on period was 20 Watts and lasted for 20 µs the pulse-off period lasted 2000 µs. The pulse plasma was continued for 10 minutes and then switched off.

### Part B (Analysis)

All the porous PE discs were weighed before and after deposition in the case of the UV grafted discs a weight gain of up to 42mg per gram of substrate was recorded. To ensure that this weight gain could not be due to the presence of any un-reacted species the discs were washed intensively with methanol, 0.5mM HCl and water (Ref. 1). No weight gain could be detected on the plasma treated discs indicating that the polymerised material was present in quantities not detectable using a 4 decimal place balance.

### Fourier Transform Infra-Red (FTIR) Spectroscopy

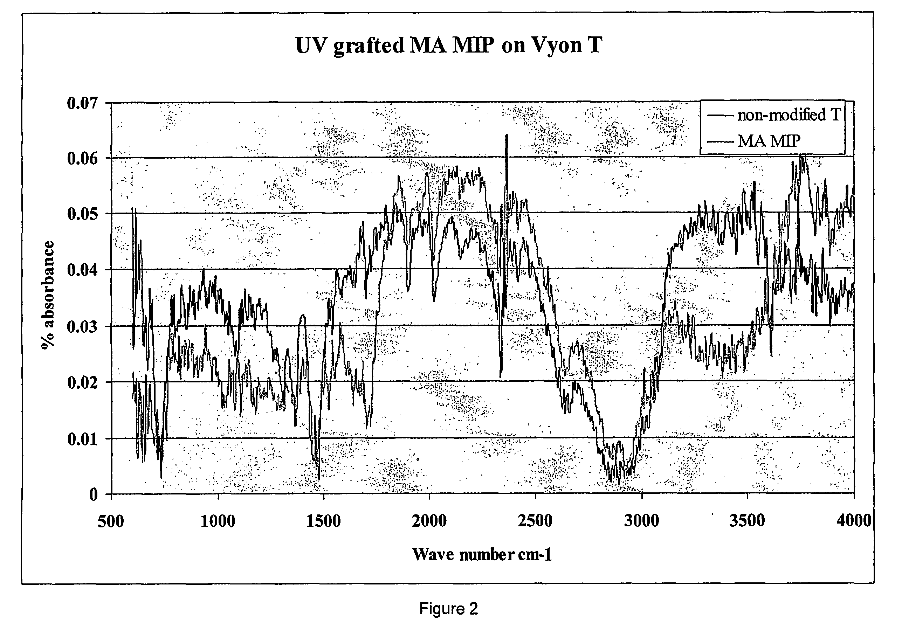

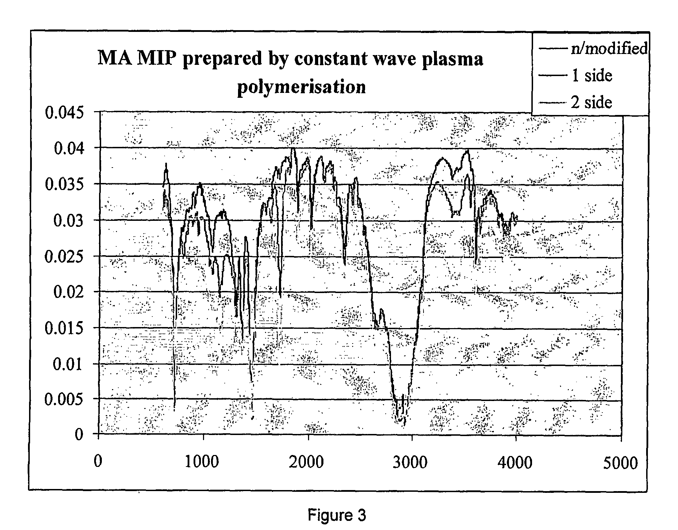

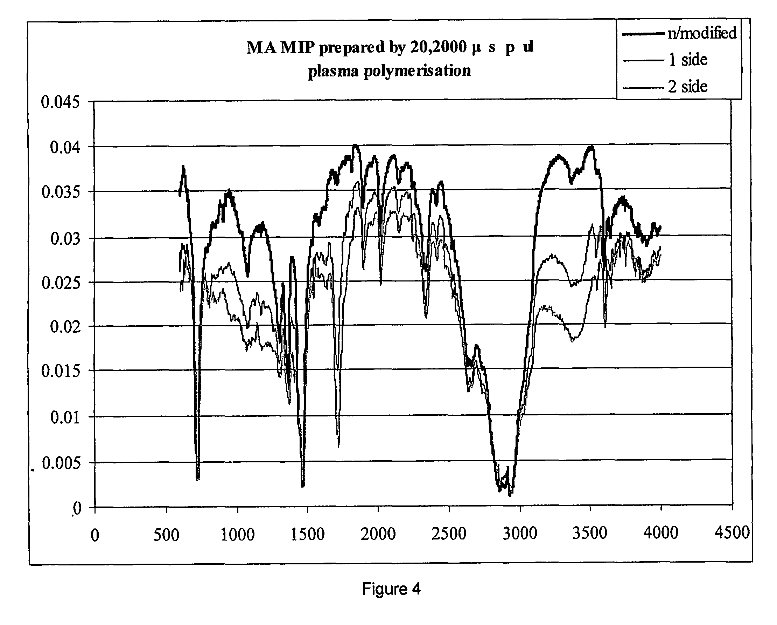

FTIR spectroscopy was used to confirm the presence of polymerised material by measuring the strong and sharp C=O carbonyl absorption peak between 1660 cm⁻¹ and 1740 cm⁻¹ and the C-OH hydroxyl peak which is also strong but broad between 2,500cm⁻¹ and 3,500cm⁻¹ (Ref. 3). Both peaks will be present in the polymerised cross-linker but not the polyethylene substrate. The spectrometer used was an IR Scope II manufactured by Bruker, the instrument was used in reflectance mode. The FTIR spectra of the treated discs confirmed the presence of the carbonyl peak at approximately 1700 cm⁻¹ and the hydroxyl peak at approximately 3400 cm⁻¹ in the UV grafted, the continuous plasma grafted and the pulse plasma grafted samples. The washing treatment described above would have removed any remaining un-reacted species that might have contributed to these absorption peaks. These peaks were not found in the untreated porous polyethylene. The spectrum for the UV grafted material is shown in Figure 2, the spectrum for continuous plasma grafted material is shown in Figure 3 and the spectrum for the pulse plasma grafted material is shown in Figure 4. All three figures also contain spectra of the non-modified porous polyethylene to highlight the differences between them.

### Template Adsorption Selectivity

Atrazine adsorption selectivity of the MIP grafted porous polyethylene substrate produced by the two techniques was determined using High Performance Liquid Chromatography/Mass Spectrometry (HPLC/MS). The quantification of atrazine was performed on a Waters HPLC in tandem with a bench-top triple quadropole mass spectrometer model Micromass Quatro Micro (Waters, USA) equipped with an electrospray probe. The values of the voltages applied to the sampling cone (50V), capillary (3.2V), and collision cell (20eV) were optimised by continuous infusion in order to achieve the highest possible sensitivity for atrazine.

The electrospray probe was maintained at +350° C with a spray voltage of 450 V for positive ionisation mode. The electron multiplier was set at 650 V.

HPLC-MS analyses were carried out in MRM mode, where the daughter fragment (174m/z) was monitored.

The HPLC conditions were as follows:
Mobile phase- acetonitrile,
flow rate- 0.2 ml/min,
column-Luna 3 µm,
i.d. 3 mm,
length- 50 mm
(Phenomenex, UK).

Every injection was carried out for 3 min. The quantification was performed using the MassLynx software.

Firstly the atrazine used to imprint the polymer was thoroughly washed out of the samples using a solution of 50mM hydrochloric acid in methanol followed by pure water. This was done until no trace of atrazine could be detected in the final washings using HPLC/MS as described above. A 10ml aliquot of solution containing 100ng/ml of atrazine was then passed through the pore structure of the discs the collected solutions were then analysed for their atrazine concentrations using the HPLC/MS which had been previously calibrated using separately prepared standard atrazine solutions. A similar filtration and analysis was carried out using blank polymers samples prepared in the same way by UV grafting and plasma polymerisation in the absence of a template and as an additional control an un-modified porous polyethylene disc was also tested.

### Results

The UV grafted MIP sample (not according to the invention) adsorbed the highest amount of atrazine removing an average of 85.8% of the atrazine from solution, the UV grafted blank disc removed an average of 81.5% of the atrazine from solution. The continuous plasma grafted MIP sample removed an average of 64.7% of the atrazine from solution and the continuous plasma grafted blank removed an average of 20.7% of the atrazine from solution. The un-modified porous polyethylene disc removed an average of 25% of the atrazine from solution. The pulsed plasma MIP removed on average 22% of the atrazine from solution and the pulsed plasma blank removed on average 10.3% of atrazine from solution. The detailed results are shown in Table 1 below.

**Table 1**

| **Treatment on Porous Polyethylene (Vyon^{®} T)** | **Atrazine Adsorption, %** | | | **% Average Adsorption** |
|---|---|---|---|---|
| | **1** | **2** | **3** | |
| Untreated Substrate | 25 | | | 25 |
| UV Graft MA-MIP (not according to the invention) | 90.8 | 81.3 | 85.4 | 85.8 |
| UV Graft MA-Blank (not according to the invention) | 88.6 | 80.0 | 75.9 | 81.5 |
| Continuous Plasma Graft MA-MIP | 68 | 61.4 | | 64.7 |
| Continuous Plasma Graft MA-Blank | 22 | 19.4 | | 20.7 |
| Pulsed Plasma Graft 20µsOn/2000µsOff MA-MIP | 25 | 19 | | 22 |
| Pulsed Plasma Graft 20µsOn/2000µsOff MA-Blank | 9 | 11.7 | | 10.3 |

Taken together the HPLC/MS evidence and FTIR spectra clearly demonstrate that a MIP can be grafted to the surface of a porous polyethylene substrate. It can be done using UV grafting in an aqueous system or by plasma grafting in a reaction vessel using a solvent free system. In both these cases the MIP was more selective to atrazine than either the blank or the base porous polyethylene support material. The pulse plasma graft appears less selective than the untreated porous polyethylene however the adsorption differences between the MIP and the blank and the FTIR spectra strongly suggest that a MIP has been formed and deposited by the pulsed plasma.

### Example 2 (not according to the invention) - UV grafting of different aqueous based functional monomer systems (MA, AMPSA and TFMA) with MBA as the cross-linker and an atrazine template on a porous polyethylene substrate

The experiments in this example are designed to show that various functional monomers can be used to form molecularly imprinted polymers through a stack of porous polyethylene discs 10mm thick.

### Part A (Preparation)

The experimental conditions used in this example are the same as those used in example 1 for the UV grafting. To demonstrate the effect of penetration through a significant depth of the porous polymer a stack of 5, 47mm diameter discs (each 2 mm thick) was assembled and irradiated together in the aqueous solution of template, functional monomer and cross-linker. All the discs had been pre-treated with benzophenone as described in example 1. Similar experiments were carried out where the functional monomer species MA was substituted with 2-acrylamido-2-methylpropanesulphonic acid (AMPSA) and 3,4 methacrylic acid (TFMA). These two functional monomers were used in the same molar concentrations as the MA in example 1, the template and cross-linker concentrations were also kept at the same concentration as example 1. All the grafted sample discs were weighed before and after grafting to determine the weight of polymer deposited in each case. The discs were washed thoroughly by the method described in example 1 to ensure all the unreacted species were removed from them.

### Part B (Analytical)

Table 2 details the weight gained by each disc in the stack using the different functional monomers for the grafting process.

**Table 2**

| **Porous PE disc position** | **MA-MIP (g/g of disc)** | **MA-Blank (g/g of disc)** | **TFMA-MIP (g/g of disc)** | **TFMA-Blank (g/g of disc)** | **AMPSA-MIP (g/g of disc)** | **AMPSA-Blank (g/g of disc)** |
|---|---|---|---|---|---|---|
| Top | 0.033 | 0.0091 | 0.12 | 0.0115 | 0.014 | 0.011 |
| Second | 0.0073 | 0.0047 | 0.0059 | 0.0015 | 0.0059 | 0.0039 |
| Third | 0.0053 | 0.0032 | 0.0066 | 0.0011 | 0.0049 | 0.0021 |
| Fourth | 0.005 | 0.0022 | 0.0057 | 0.0007 | 0.004 | 0.0024 |
| Bottom | 0.0072 | 0.0096 | 0.0011 | 0.0021 | 0.0066 | 0.0052 |

The weight gains demonstrate that different functional monomers can be used to UV graft a MIP onto porous plastic discs and that grafting can be carried out through a stack of five discs exposed to the UV treatment in solution together. The data shows that the degree of grafting decreases significantly with depth through the stack. The data also shows that much more polymer is formed on the top disc when TFMA is used as the functional monomer. The weight gain for the blank under the same experimental conditions was, in almost all cases, significantly less than for the MIP. Since the only difference between them is the presence of the atrazine template this suggests that the template is assisting the polymerisation reaction because of its affinity to the functional monomers. The significantly greater weight gain of the TFMA suggests that this has the most affinity with the template.

Atrazine adsorption selectivity for these grafted discs was determined using HPLC/MS and the procedure described in example 1 the results are shown in Table 3 below.

**Table 3 - Percentage atrazine adsorption by grafted discs**

| **Polymer grafted discs** | **Atrazine adsorption %** | |
|---|---|---|
| | **MIP** | **Blank** |
| MA | 90.8 | 88.6 |
| TFMA | 82 | 80 |
| AMPSA | 96.8 | 39.4 |
| Unmodified Vyon | 82 | 82 |

The UV MIP grafts all adsorb a greater percentage of atrazine from solution than the blank grafts. The AMPSA MIP demonstrates the greatest adsorption overall and the greatest difference with the blank.

### Example 3 - Plasma grafting of functional monomers on a porous polyethylene structure pre-coated with a large template molecule.

The experiments in this example are designed to show that a non-volatile template such as a protein can be used to create a molecularly imprinted polymer by plasma polymerisation of the monomer onto the pre-coated porous polyethylene substrate.

### Part A (Preparation)

The template used was the protein HorseRadish Peroxidase (HRP). It was adsorbed onto the porous substrate (Vyon^{®} T) by passing 10ml of a 0.1% solution in water through 47mm diameter discs of porous polyethylene and then freeze drying them to remove the water. The excess non-bound HRP was removed by passing 30ml of water through the discs in three separate 10ml washings, which washed out any non-bound HRP. The discs were then placed in the plasma reaction vessel (Example 1, ref. 2), the vessel was pumped down to base pressure and the pure functional monomer, either MA or vinyl pyridine (VP) was introduced through the inlet port by diffusion. A continuous plasma was ignited within the reaction vessel using the same experimental conditions described in example 1. Polymerisation/deposition then occurred, which grafted the monomer to the porous structure of the pre-coated polyethylene, the pre-coated HRP forming the template for the functional monomer to imprint on. The treated discs were then washed by filtration using 3% acetic acid contained 0.1% Tween 20 (7x10 ml) to remove all of the pre-coated HRP template. No trace of enzymatic activity was detected on the grafted porous substrate with the of 3,3',5,5'-tetramethylbenzidine (TMB) test as described in Ref. 4. A blank sample was prepared by continuous plasma polymerisation/deposition using the same procedure with methacrylic acid but without the HRP pre-coating on the porous polyethylene substrate, this was used as a control.

### Part B (Analysis)

The discs were then transferred into Phosphate Buffered Saline, pH 7.4 (PBS) for 30 minutes to condition them to remove any remaining acid and adjust the pH. Smaller discs (diameter- 6 mm) were then cut out of the main sample discs and incubated with either 10 µg/ml or 100 µg/ml HRP in PBS containing 0.1% Tween 20 for 90 min at 4°C.
In order to demonstrate the degree of binding of the HRP, each of the 6mm diameter discs was then put through a wash cycle with PBS containing 0.1 % Tween 20, the cycle was either 1, 2, 3 or 4 washes. After washing all the discs were placed into separate wells within a microtitre plate and incubated in 150 µl of 3,3',5,5'-tetramethylbenzidine (TMB - Sigma product No. T8665) for 5 min. 50 µl of solution from each of the incubated wells was then transferred into a separate well in a new microtitre plate and measured using a microtitre plate reader at 550 nm. All the analysis was carried out in duplicate.

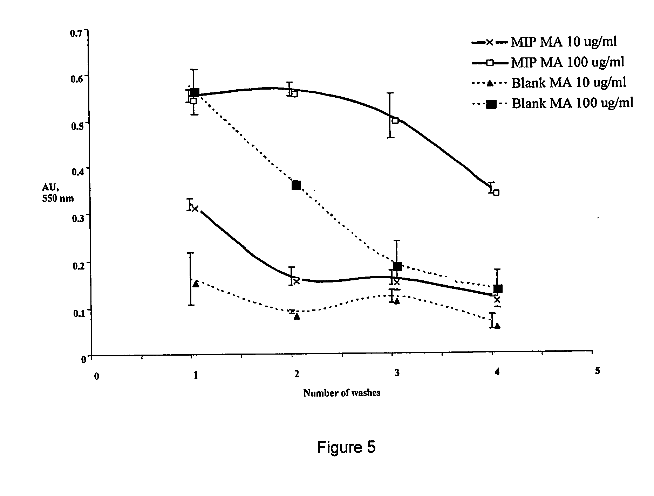

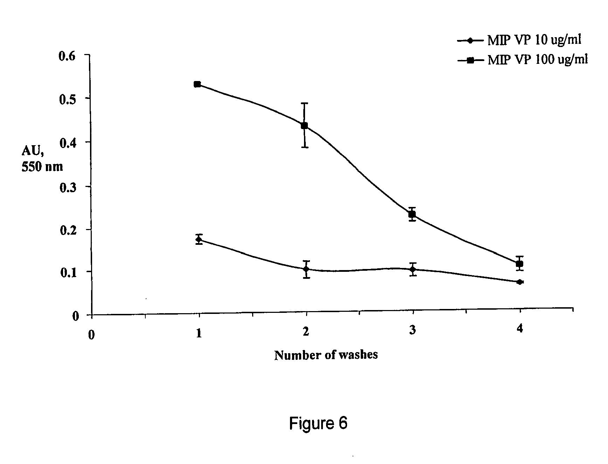

The results show that the imprinted discs take more washing cycles to remove the HRP than the blanks which indicates that they have a higher affinity towards the HRP than discs with only the blank grafted to them (Figure 5). A graph of the retention of HRP in the VP MIP is also shown in Figure 6, which suggests a similar level of affinity.

All the examples have shown that the template can be removed from these MIP grafted substrates to a level where they are not detectable by analysis. This has proved difficult if not impossible with most other MIP systems.

### REFERENCES

1. Piletsky et. al. Macromolecules 2000, 33, 3029 - 3098.
2. Coulson et. al. J. Phys. Chem. B 2000, 104, 8836-8840.
3. "IR and Raman characteristic frequencies of organic molecules". D Lin-Vien et.al. Academic Press, 1991 ISBN 0124511600.
4. J Naar et.al. Toxicon, June 2001, Vol. 39, Issue 6, 868-878.

## Claims

1. A process for the preparation of a functionalised porous material comprising the steps of:
(i) sintering polymer components to provide a porous substrate, the porous substrate comprising a body having an external surface and pores extending from the external surface into the body, wherein the pores define an internal surface; and
(ii) grafting, using solvent-less plasma polymerisation, a molecularly imprinted polymer synthesised *in situ* using plasma polymerisation onto the porous substrate to provide the functionalised porous material, wherein the molecularly imprinted polymer is grafted onto the external surface and onto the internal surface of the porous substrate.

2. A process according to claim 1 wherein the polymer components are polyolefin components.

3. A process according to claim 1 or 2 wherein the polymer components are polyethylene components.

4. A process according to any one of claims 1 to 3 wherein the polymer components are a polymer powder.

5. A process according to any one of the preceding claims wherein the polymer components are sintered in a mould.

6. A process according to any one of claims 1 to 4 wherein the polymer components are sintered in the form of a sheet.

7. A process according to any one of claims 1 to 3 wherein the polymer components are polymer fibres.

8. A process according to any one of the preceding claims wherein the molecularly imprinted polymer is capable of interacting with a species selected from the group consisting of a metal ion, a toxin, a pharmaceutical compound and a microbial organism.

9. A process according to any one of the preceding claims wherein the molecularly imprinted polymer is capable of immobilising a species selected from the group consisting of a metal ion, a toxin, a pharmaceutical compound and a microbial organism.

10. A process according to claim 1 wherein the number of grafted chemical species per unit area on the external surface is approximately equal to the number of grafted chemical species per unit area on the internal surface.

## Patentansprüche

1. Verfahren zur Herstellung eines funktionalisierten porösen Materials, das folgende Schritte umfasst:
(i) Sintern von Polymerkomponenten zur Bereitstellung eines porösen Substrats, wobei das poröse Substrat einen Körper mit einer externen Oberfläche und sich von der externen Oberfläche in den Körper erstreckenden Poren umfasst, wobei die Poren eine interne Oberfläche definieren; und
(ii) Aufpfropfen eines mittels Plasmapolymerisation in situ synthetisierten molekular geprägten Polymers auf das poröse Substrat mittels lösungsmittelfreier Plasmapolymerisation zur Bereitstellung des funktionalisierten porösen Materials, wobei das molekular geprägte Polymer auf die externe Oberfläche und auf die interne Oberfläche des porösen Substrats aufgepfropft wird.

2. Verfahren nach Anspruch 1, bei dem es sich bei den Polymerkomponenten um Polyolefinkomponenten handelt.

3. Verfahren nach Anspruch 1 oder 2, bei dem es sich bei den Polymerkomponenten um Polyethylenkomponenten handelt.

4. Verfahren nach einem der Ansprüche 1 bis 3, wobei es sich bei den Polymerkomponenten um ein Polymerpulver handelt.

5. Verfahren nach einem der vorhergehenden Ansprüche, bei dem die Polymerkomponenten in einer Form gesintert werden.

6. Verfahren nach einem der Ansprüche 1 bis 4, bei dem die Polymerkomponenten in Form eines Flächengebildes gesintert werden.

7. Verfahren nach einem der Ansprüche 1 bis 3, bei dem es sich bei den Polymerkomponenten um Polymerfasern handelt.

8. Verfahren nach einem der vorhergehenden Ansprüche, bei dem das molekular geprägte Polymer zur Wechselwirkung mit einer Spezies aus der Gruppe bestehend aus einem Metallion, einem Toxin, einer pharmazeutischen Verbindung und einem mikrobiellen Organismus befähigt ist.

9. Verfahren nach einem der vorhergehenden Ansprüche, bei dem das molekular geprägte Polymer zur Immobilisierung einer Spezies aus der Gruppe bestehend aus einem Metallion, einem Toxin, einer pharmazeutischen Verbindung und einem mikrobiellen Organismus befähigt ist.

10. Verfahren nach Anspruch 1, bei dem die Zahl von auf die externe Oberfläche aufgepfropften chemischen Spezies pro Flächeneinheit ungefähr gleich der Zahl von auf die interne Oberfläche aufgepfropften chemischen Spezies pro Flächeneinheit ist.

## Revendications

1. Procédé de préparation d'un matériau poreux fonctionnalisé comprenant les étapes consistant à :
(i) fritter des composants polymères pour obtenir un substrat poreux, le substrat poreux comprenant un corps ayant une surface externe et des pores s'étendant depuis la surface externe à l'intérieur du corps, les pores définissant une surface interne ; et
(ii) greffer, en utilisant la polymérisation par plasma sans solvant, un polymère à empreintes moléculaires synthétisé *in situ* en utilisant la polymérisation par plasma sur le substrat poreux pour obtenir le matériau poreux fonctionnalisé, le polymère à empreintes moléculaires étant greffé sur la surface externe et sur la surface interne du substrat poreux.

2. Procédé selon la revendication 1 dans lequel les composants polymères sont des composants polyoléfiniques.

3. Procédé selon la revendication 1 ou 2 dans lequel les composants polymères sont des composants polyéthyléniques.

4. Procédé selon l'une quelconque des revendications 1 à 3 dans lequel les composants polymères constituent une poudre polymère.

5. Procédé selon l'une quelconque des revendications précédentes dans lequel les composants polymères sont frittés dans un moule.

6. Procédé selon l'une quelconque des revendications 1 à 4 dans lequel les composants polymères sont frittés sous la forme d'une feuille.

7. Procédé selon l'une quelconque des revendications 1 à 3 dans lequel les composants polymères sont des fibres polymères.

8. Procédé selon l'une quelconque des revendications précédentes dans lequel le polymère à empreintes moléculaires est susceptible d'interagir avec une espèce choisie dans le groupe constitué par un ion métallique, une toxine, un composé pharmaceutique et un organisme microbien.

9. Procédé selon l'une quelconque des revendications précédentes dans lequel le polymère à empreintes moléculaires est susceptible d'immobiliser une espèce choisie dans le groupe constitué par un ion métallique, une toxine, un composé pharmaceutique et un organisme microbien.

10. Procédé selon la revendication 1 dans lequel le nombre d'espèces chimiques greffées par unité de surface sur la surface externe est approximativement égal au nombre d'espèces chimiques greffées par unité de surface sur la surface interne.
